Europäisches Patentamt

European Patent Office

Office européen des brevets

(19)

(11) **EP 0 671 209 B1**

(12) **EUROPÄISCHE PATENTSCHRIFT**

(45) Veröffentlichungstag und Bekanntmachung des Hinweises auf die Patenterteilung:
**13.10.1999 Patentblatt 1999/41**

(51) Int. Cl.$^6$: **B01J 20/10**, B01J 20/12, B01J 21/16

(21) Anmeldenummer: **95102453.8**

(22) Anmeldetag: **21.02.1995**

(54) **Verfahren zur Herstellung von Adsorptionsmittelgranulaten**

Process for producing granules of adsorbents

Procédé pour produire des granulés d'adsorbants

(84) Benannte Vertragsstaaten:
**DE ES GB**

(30) Priorität: **23.02.1994 DE 4405878**

(43) Veröffentlichungstag der Anmeldung:
**13.09.1995 Patentblatt 1995/37**

(73) Patentinhaber: **SÜD-CHEMIE AG**
**80333 München (DE)**

(72) Erfinder:
• **Engelhardt, Thomas, Dr.**
**D-85356 Freising (DE)**
• **Hähn, Reinhard, Dr.**
**D-84186 Vilsheim (DE)**

(74) Vertreter: **Reitzner, Bruno, Dr.**
**Patentanwälte Dipl.-Ing. R. Splanemann**
**Dr. B. Reitzner, Dipl.-Ing. K. Baronetzky**
**Tal 13**
**80331 München (DE)**

(56) Entgegenhaltungen:
**EP-A- 0 228 305**          **EP-A- 0 276 954**
**EP-A- 0 398 636**          **EP-A- 0 608 988**
**US-A- 5 114 893**

Bemerkungen:
Die Akte enthält technische Angaben, die nach dem Eingang der Anmeldung eingereicht wurden und die nicht in dieser Patentschrift enthalten sind.

## Beschreibung

Die Erfindung betrifft ein Verfahren zur Herstellung von Adsorptionsmittelgranulaten durch Säureaktivierung von säureaktivierbaren, teilchenförmigen Silicaten und Formen der säureaktivierten Silicate.

Derartige Adsorptionsmittelgranulate können zum Beispiel zur Entfernung von unerwünschten olefinischen Verunreinigungen aus Gemischen aromatischer Kohlenwasserstoffe verwendet werden, die wegen der Ähnlichkeit der Siedepunkte nicht destillativ abgetrennt werden können. Hierbei werden die Olefine an einem Adsorberfestbett aus dem Aromatengemisch entfernt, indem das Gemisch gewöhnlich bei Temperaturen zwischen 150 und 220°C über ein Schüttbett eines geeigneten Adsorbers geleitet wird. Vorteilhaft kann die Olefinentfernung mit anderen Reinigungsoperationen, wie der Entschwefelung, kombiniert werden.

Als Adsorbentien zur Entfernung von Olefinen aus Aromatengemischen wurden bereits natürliche oder synthetische Silicate eingesetzt, beispielsweise sauer aktivierte Bentonite (z.B. die US-A-1,162,945, US-A-2,778,863 und US-A-3,835,037). Es können aber auch andere synthetische Silicate, wie Al-Silicate, Mg-Silicate, Zr-Silicate und Zeolithe eingesetzt werden. Die Verwendung von Zeolithen für die Olefinentfernung aus Aromatenfraktionen ist zum Beispiel aus der US-A-4,795,550 bekannt.

Die Adsorptionsmittel werden üblicherweise in Form von feinteiligen Granulaten eingesetzt. Diese Granulate sind sowohl bei der Befüllung der Adsorbertürme als auch im Betrieb einer starken mechanischen Beanspruchung unterworfen, was zur Bildung von feinteiligem Abrieb führt. Dieser feinteilige Abrieb kann zu einer Verdichtung des Absorberbettes führen, wodurch der Druckabfall im Absorberturm auf einen nicht mehr akzeptablen Wert ansteigt. Dies zwingt unter Umständen zu einem vorzeitigen Austausch des Adsorberbettes.

Aus der US-A-5 008 227 ist ein Verfahren zur Herstellung von säureaktivierter Bleicherde aus einem rohen Attapulgit-Ton bekannt. Der getrocknete und gemahlene Ton wird mit kleinen Mengen an Aktivierungssäuren vermischt. Ferner kann eine Suspension in Form einer Mischung aus Ton und Säure sprühgetrocknet werden. Das Reaktionsprodukt wird nicht ausgewaschen und nicht granuliert.

Nach der US-A-4 847 226 und der US-A-4 919 818 werden Tone, z.B. Bentonite, extrudiert. Die Extrudate werden entweder vor oder nach dem Vermahlen in einer wäßrigen Säurelösung behandelt, wobei eine Suspension der Tonteilchen erhalten wird. Der säureaktivierte Ton wird von der sauren Lösung abgetrennt, säurefrei gewaschen, filtriert und dann getrocknet. Es werden keine Granulate hergestellt.

Der Erfindung lag die Aufgabe zugrunde, die mechanische Festigkeit und damit die Abriebbeständigkeit von Adsorptionsmittelgranulaten von säureaktivierten Silikaten zu verbessern, und zwar unabhängig davon, ob das Adsorptionsmittelgranulat für das vorstehend beschriebene Verfahren zur Entfernung von Olefinen aus Aromatengemischen oder für andere Verfahren verwendet wird, die nachstehend noch näher erläutert sind.

In der EP-A-0 608 988 (Stand der Technik gemäß Art. 54(3) und (4) EPÜ) ist ein Verfahren zur Herstellung von Granulaten aus säureaktiviertem Smektit beschrieben, nach welchem die Smektitteilchen mit einer Säure behandelt werden, worauf die überschüssige Säure von den Smektitteilchen gewaschen wird, um einfach säureaktivierte Smektitteilchen zu erzeugen. Anschließend werden die so erhaltenen Teilchen mit Wasser und einer Säure vermischt, um eine zweite Säureaktivierung der Smektitteilchen zu bewirken. Die in zwei Stufen aktivierten Smektitteilchen werden durch Vermischen über einen Zeitraum von 25 bis 35 Minuten granuliert.

Gegenstand der Erfindung ist somit ein Verfahren zur Herstellung von Adsorptionsmittelgranulaten durch Säureaktivierung von säurereaktivierbaren teilchenförmigen Silikaten und Formen der säureaktivierten Silicate; dieses Verfahren ist dadurch gekennzeichnet, daß man das von der sauren Aktivierungsflüssigkeit abgetrennte feuchte, säureaktivierte Silicat trocknet und zerkleinert; das zerkleinerte Produkt nach Befeuchten mit Wasser oder einer wasserhaltigen Flüssigkeit unter Bildung von Klumpen verknetet; die Klumpen zu einem Granulat zerkleinert; und das erhaltene Granulat nach dem Abtrennen der Feinanteile trocknet.

Die abgesiebten Feinanteile können in das Verfahren zurückgeleitet werden; vorzugsweise werden sie zusammen mit dem getrockneten säureaktivierten Silicat nochmals zerkleinert.

Die Säureaktivierung der säureaktivierbaren, teilchenförmigen Silicate erfolgt im Allgemeinen durch Behandlung des Silicats mit Salz- oder Schwefelsäure bei höheren Temperaturen. Die saure Aktivierungsflüssigkeit, die jetzt die Salze von einoder mehrwertigen Kationen aus den Silicaten enthält, wird von dem säureaktivierten Silicat im allgemeinen durch Filtrieren abgetrennt. Der erhaltene feuchte Filterkuchen wird dann säurefrei gewaschen und anschließend getrocknet. Die erhaltenen Klumpen werden auf die gewünschte Korngröße gebrochen und die Feinanteile abgesiebt.

Durch die weiteren erfindungsgemäßen Maßnahmen kann in überraschender Weise die Abriebfestigkeit des erhaltenen Granulats erheblich gesteigert werden. Die Verknetung kann mit Hilfe eines Extruders oder eines anderen geeigneten Mischaggregats, zum Beispiel eines Eirich-Intensivmischers, erfolgen. Die Energieaufnahme beim Verkneten beträgt im allgemeinen 0,01 bis 1 kWh/kg, insbesondere 0,05 bis 0,5 kWh/kg befeuchtetes Material. Der Begriff "Verknetung" ist jedoch nicht auf die angegebenen Verfahren beschränkt, sondern umfaßt alle Kompaktierungsverfahren. Beispielsweise kann die Kompaktierung auch mit Hilfe einer Brikettpresse oder ähnlichen Verdichtungseinrichtungen erfolgen.

Das erfindungsgemäße Verfahren läßt sich auf alle natürlichen und synthetischen säureaktivierbaren Silicate anwenden. So können Bentonite, Saponite, Hektorite, Attapulgite, Sepiolithe und andere säureaktivierbare Silikate eingesetzt werden. Bevorzugt werden Bentonite eingesetzt.

Ein wichtiger Schritt des erfindungsgemäßen Verfahrens ist die Zerkleinerung des getrockneten, säureaktivierten Silicats. Vorzugsweise zerkleinert man dieses auf eine mittlere Teilchengröße von weniger als etwa 100 μm, insbesondere von 5 bis 80 μm.

Nach einer weiteren bevorzugten Ausführungsform des Verfahrens stellt man den Wassergehalt beim Verkneten auf einen Wert ein, der niedriger ist als der Wassergehalt des feuchten, säureaktivierten Produktes. Insbesondere wird der Wassergehalt beim Verkneten auf etwa 35 bis 55, vorzugsweise auf etwa 40 bis 50 Gew.-%, eingestellt.

Eine weitere Verbesserung der Abriebfestigkeit kann man dadurch erreichen, daß man das trockene Granulat einer thermischen Nachbehandlung unterzieht.

Vorzugsweise führt man die thermische Nachbehandlung bei Temperaturen bis zu etwa 300°C, vorzugsweise von etwa 100 bis 250 °C durch.

Gegenstand der Erfindung ist ferner ein Adsorptionsmittelgranulat, das nach dem vorstehend beschriebenen Verfahren erhältlich ist und das durch einen Naßabriebwert von weniger als 20% gekennzeichnet ist. Der Naßabriebwert wird wie folgt bestimmt:

In ein 600 ml-Becherglas werden 500 ml Leitungswasser gegeben; in diesem werden 10 g Granulat suspendiert, welches bei 110°C 3 Stunden getrocknet wurde. Der Flügelrührer, der die wäßrige Suspension in Schwebe hält, befindet sich etwa 4 cm vom Boden entfernt und rotiert mit 300 U/min.

Nach einer Rührzeit von 24 Stunden wird die Suspension auf einem 0,2 mm-Sieb naß gesiebt und der Rückstand bei 110°C getrocknet und zurückgewogen. Der prozentuale Naßabriebwert wird nach folgender Formel berechnet: (Einwaage - Siebrückstand) x 10 = Naßabriebwert (%).

Gegenstand der Erfindung ist ferner die Verwendung des vorstehend beschriebenen Adsorptionsmittelgranulats zur Entfernung von Olefinen aus Gemischen aromatischer Kohlenwasserstoffe. Hierbei werden die Olefine an den sauren Zentren der säureaktivierten Silikate bei erhöhten Temperaturen (etwa 150 bis 220°C) oligomerisiert, wodurch sich ihre Siedepunkte erhöhen, so daß eine destillative Abtrennung von den Aromaten möglich ist. Ferner können die Adsorptionsmittelgranulate auch als Katalysatoren für andere säurekatalysierte Reaktionen eingesetzt werden. Zu diesen Reaktionen gehören Verätherungen durch Umsetzung von Alkoholen oder Epoxiden; Veresterungen durch Umsetzung von Säuren bzw. Säureanhydriden mit Alkoholen, Epoxiden und Olefinen; Isomerisierungen; Herstellung von alkylaromatischen Verbindungen durch Umsetzung von aromatischen Verbindungen mit Alkoholen bzw. Olefinen; Hydratisierungen von Olefinen und Dehydratisierungen von Alkoholen; Alkoxylierung und Acetalisierung von ungesättigten Aldehyden; Herstellung von alkylierten aromatischen Aminen und ähnliche säurekatalysierte Reaktionen.

Die Erfindung ist durch die nachstehenden Beispiele in nicht einschränkender Weise erläutert.

Beispiel 1 (Vergleich)

200 kg Calciumbentonit werden unter kräftigem Rühren mit 1000 Liter Wasser 3 Stunden dispergiert. Anschließend gibt man 25 kg 37%ige Salzsäure zu und hält diese Mischung unter Rühren 8 Stunden lang auf einer Temperatur von 90°C. Die erkaltete Suspension wird anschließend auf eine Membranfilterpresse gegeben und filtriert. Der Filterkuchen wird dann gewaschen, bis das Filtratwasser chloridfrei ist. Dann wird der Filterkuchen über die Membran bis auf einen Feuchtigkeitsgrad von 58 % entwässert. Hierzu wird auf eine wasserundurchlässige flexible Membran, die sich hinter dem Filtertuch befindet, ein Druck von 5 bar aufgegeben, der über einen Zeitraum von 5 Stunden aufrechterhalten wird. Anschließend läßt man den Druck ab und entleert die Filterpresse manuell. Der feuchte Filterkuchen wird anschließend 12 Stunden bei 120°C getrocknet. Der getrocknete Filterkuchen wird anschließend in einem Brecher auf eine Korngröße unter 2 mm gebrochen und auf einem Walzenstuhl weiter zerkleinert. Aus dem Gemisch wird eine Kornfraktion zwischen 0,3 und 0,6 mm abgesiebt. Die Feinanteile können dem feuchten Filterkuchen zugesetzt werden.

Der Naßabriebwert, der nach dem vorstehend angegebenen Verfahren bestimmt wurde, betrug 35 %.

Beispiel 2

Der nach dem Vergleichsbeispiel 1 erhaltene gewaschene und abgepreßte Filterkuchen wird ebenfalls 12 Stunden bei 120°C getrocknet und anschließend auf eine Korngröße von < 100 μm vermahlen. 100 kg dieses vermahlenen Pulvers werden anschließend in einem Eirich-Intensivmischer mit 73 Liter Wasser versetzt und anschließend 10 Min. bei höchster Wirblergeschwindigkeit verknetet und granuliert. Die Energieaufnahme beträgt 0,03 kWh/kg. Das so erhaltene Granulat wird anschließend bei 120°C getrocknet und auf einem Walzenstuhl auf eine Korngröße von weniger als 1 mm gebracht. Hieraus wird die Fraktion zwischen 0,3 und 0,6 mm abgesiebt. Mit dieser Fraktion wird der Naßabriebwert bestimmt. Das Überkorn wird in den Walzenstuhl zurückgeleitet. Das Unterkorn wird zusammen mit dem getrockneten Filterkuchen vermahlen.

Der Naßabriebwert betrug 19 %.

Beispiel 3

Der im Vergleichsbeispiel 1 erhaltene Filterkuchen wird bei 120°C getrocknet und auf eine Korngröße von < 100 μm vermahlen. 100 kg dieses vermahlenen Filterkuchens werden mit 73 kg Wasser in einem Z-Kneter über einen Zeitraum von 10 Min. gemischt. Diese Mischung wird anschließend auf einem Extruder zu Vollzylindern mit 3 mm Durchmesser verpreßt. Die Aufgabe- und Vorschubgeschwindigkeit wird so geregelt, daß der Pressendruck zwischen 10 und 50 bar liegt. Die Energieaufnahme (Z-Kneter und Extruder) betrug 0,23 kWh/kg.

Das bei 120°C getrocknete Extrudat wird anschließend im Walzenstuhl auf eine Korngröße < 1 mm gebrochen. Dann wird die Fraktion zwischen 0,3 und 0,6 mm abgesiebt; der Naßabriebwert dieser Fraktion betrug 17 %.

Das Überkorn und das Unterkorn wurden wie nach Beipiel 2 behandelt.

Beispiel 4

Das nach Beispiel 2 erhaltene Granulat mit einem Korngrößebereich von 0,3 bis 0,6 mm wird 2 Stunden bei 250°C thermisch behandelt; sein Naßabriebwert betrug 8 %.

Beispiel 5

Das nach Beispiel 3 erhaltene Granulat mit einem Teilchengrößebereich zwischen 0,3 und 0,6 mm wird anschließend bei 250°C thermisch behandelt; sein Naßabriebwert betrug 9 %.

Beispiel 6

(Aromatenreinigung)

In eine HPLC-Säule (10 mm Innendurchmesser, 150 mm Länge) wird das nach Beispiel 3 erhaltene Granulat eingefüllt. Die HPLC-Säule wird in ein thermostatisiertes Ölbad gestellt und auf eine Temperatur von 200 °C aufgeheizt. Über das Granulatbett wird anschließend ein Benzol-Toluol-Gemisch gepumpt, das in einer Raffinerie bei der Verarbeitung von Rohöl nach der Sulfolanextraktion anfällt. Dieses Benzol-Toluol-Gemisch hat einen Brom-Index von 47 mg $Br_2$/100g. Die Förderleistung der HPLC-Pumpe wird auf einen LHSV-Wert (Liquid hourly space velocity = Raumgeschwindigkeit) von 2,0 eingestellt. Nach 4, 8, 12 und 16 Stunden wird eine Probe des behandelten Benzol-Toluol-Gemisches entnommen und der Brom-Index bestimmt.
Hierbei werden folgende Ergebnisse erhalten:

| | |
|---|---|
| 4 h | 2,5 mg $Br_2$/100g |
| 8 h | 2,5 mg $Br_2$/100g |
| 12 h | 2,5 mg $Br_2$/100g |
| 16 h | 2,5 mg $Br_2$/100g |

Es zeigt sich, daß über den gesamten Versuchszeitraum der Olefin-Gehalt (ausgedrückt durch den Brom-Index) erheblich reduziert werden kann.

Beispiel 7

(Saure Katalyse)

Die Edelstahl-HPLC-Säule nach Beispiel 6 wird mit einem nach Beispiel 2 hergestellten Granulat gefüllt. Über eine HPLC-Pumpe wird über diese Säule ein Gemisch aus 950 g Phenol und 1000 g Cyclohexanol gepumpt. Die Förderleistung wird auf einen LHSV-Wert von 2 eingestellt. Die HPLC-Säule wird in einem thermostatisierten Ölbad auf 140 °C eingestellt. Nach einer Stunde wird das Reaktionsprodukt gaschromatographisch analysiert und der Anteil an nicht umgesetztem Phenol bestimmt. Hieraus ergibt sich ein Umsatz von 86 %, bezogen auf das eingesetzte Phenol.

**Patentansprüche**

1. Verfahren zur Herstellung von Adsorptionsmittelgranulaten durch Säureaktivierung von säurereaktivierbaren teilchenförmigen Silicaten und Formen der säureaktivierten Silicate, dadurch gekennzeichnet, daß man das von der sauren Aktivierungsflüssigkeit abgetrennte feuchte, säureaktivierte Silicat trocknet und zerkleinert; das zerkleinerte Produkt nach Befeuchten mit Wasser oder einer einer wasserhaltigen Flüssigkeit ohne weitere Säureaktivierung unter Bildung von Klumpen verknetet; die Klumpen zu einem Granulat zerkleinert; und das erhaltene Granulat nach dem Abtrennen der Feinanteile trocknet.

2. Verfahren nach Anspruch 1, dadurch gekennzeichnet, daß man als säureaktivierbare Silicate, Bentonite, Saponite, Hektorite und/oder Sepiolithe verwendet.

3. Verfahren nach Anspruch 1 oder 2, dadurch gekennzeichnet, daß man das getrocknete, säureaktivierte Silicat auf eine Teilchengröße von weniger als etwa 100 $\mu$m, vorzugsweise von 5 bis 80 $\mu$m zerkleinert.

4. Verfahren nach einem der Ansprüche 1 bis 3, dadurch gekennzeichnet, daß man den Wassergehalt beim Verkneten auf einen Wert einstellt, der niedriger ist als der Wassergehalt des feuchten säureaktivierten Produktes.

5. Verfahren nach Anspruch 4, dadurch gekennzeichnet, daß man den Wassergehalt beim Verkneten auf etwa 35 bis 50, vorzugsweise auf etwa 40 bis 50 Gew.-% einstellt.

6. Verfahren nach einem der Ansprüche 1 bis 5, dadurch gekennzeichnet, daß man das trockene Granulat einer thermischen Nachbehandlung unterzieht.

7. Verfahren nach Anspruch 6, dadurch gekennzeichnet, daß man die thermische Nachbehandlung bei Temperaturen bis zu etwa 300°C, vorzugsweise von 100 bis 250 °C durchführt.

8. Adsorptionsmittelgranulat, erhältlich nach dem Verfahren nach einem der Ansprüche 1 bis 7, gekennzeichnet durch einen Naßabriebwert von weniger als 20%, wobei
der Naßabriebwert wie folgt bestimmt wird:
In ein 600 ml-Becherglas werden 500 ml Leitungswasser gegeben; in diesem werden 10 g Granulat suspendiert, welches bei 110°C 3 Stunden getrocknet wurde. Der Flügelrührer, der die wäßrige Suspension in Schwebe hält, befindet sich etwa 4 cm vom Boden entfernt und rotiert mit 300 U/min.
Nach einer Rührzeit von 24 Stunden wird die Suspension auf einem 0,2 mm-Sieb naß gesiebt und der Rückstand bei 110°C getrocknet und zurückgewogen. Der prozentuale Naßabriebwert wird nach folgender Formel berechnet:
(Einwaage - Siebrück stand) x 10 = Na ßabriebwert (%) .

9. Verwendung des Adsorptionsmittelgranulats nach Anspruch 8 bzw. hergestellt nach dem Verfahren nach einem der Ansprüche 1 bis 7, zur Entfernung von Olefinen aus Gemischen aromatischer Kohlenwasserstoffe als Katalysatoren für säurekatalysierte Reaktionen.

**Claims**

1. A process for producing adsorbent granules by acid activation of acid-activatable particulate silicates and shaping of the acid-activated silicates, characterized in that the wet acid-activated silicate separated from the acidic activation liquid is dried and comminuted; the comminuted product, after moistening with water or with a liquid containing water, is kneaded without further acid-activation to form clumps; the clumps are comminuted to granules; and the granules, after removing the fines, are dried.

2. The process according to claim 1, characterized in that bentonites, saponites, hectorites and/or sepiolites are used as acid-activatable silicates.

3. The process according to claims 1 or 2, characterized in that the dried acid-activated silicate is comminuted to a particle size of less than about 100 $\mu$m, preferably from 5 to 80 $\mu$m.

4. The process according to any one of claims 1 to 3, characterized in that the water content during kneading is adjusted to a value lower than the water content of the moist acid-activated product.

5. The process according to claim 4, characterized in that the water content during kneading is adjusted to about 35 to 50, preferably to about 40 to 50 percent by weight.

6. The process according to any one of claims 1 to 5, characterized in that the dried granules are subjected to a thermal post-treatment.

7. The process according to claim 6, characterized in that the termal post-treatment is carried out at temperatures up to about 300°C, preferably from 100 to 250°C.

8. Adsorbent granules obtainable by the process according to any one of claims 1 to 7, characterized by a wet abrasion value of less than 20%, the wet abrasion value being determined as follows:
   500 ml tap water is placed in a 600 ml beaker, 10 g of granules, previously dried for 3 hours at 110°C, are placed in the water. The stirrer paddle, which keeps the aqueous suspension suspended, is about 4 cm from the bottom of the beaker and rotates at 300 rpm.
   After stirring for 24 hours, the suspension is wet-sieved on a 0.2 mm sieve, and the residue is dried at 110°C and weighed back. The percentage of wet abrasion is determined according to the following formula:
   (sample weight - sieve residue) x 10 = wet abrasion value (%) .

9. The use of the adsorbent granules according to claim 8 or produced by the process according to any one of claims 1 to 7 for removing olefins from mixtures of aromatic hydrocarbons as catalysts for acid-catalyzed reactions.

## Revendications

1. Procédé de préparation de granulés d'adsorbant par activation à l'acide de silicates particulaires activables à l'acide et formation des silicates activés à l'acide, caractérisé en ce qu'on sèche et broie le silicate activé à l'acide humide, séparé du liquide d'activation acide ; en ce qu'on malaxe le produit broyé en formant des boules, après humidification avec de l'eau ou avec un liquide aqueux, sans activation à l'acide supplémentaire ; en ce qu'on broie les boules en un granulé et en ce qu'on sèche le granulé obtenu après séparation des fines.

2. Procédé selon la revendication 1, caractérisé en ce qu'on utilise en tant que silicates activables à l'acide, des bentonites, des saponites, des hectorites et/ou des sépiolites.

3. Procédé selon la revendication 1 ou 2, caractérisé en ce qu'on broie le silicate activé à l'acide séché selon une granulométrie inférieure à environ 100 µm, de préférence de 5 à 80 µm.

4. Procédé selon l'une des revendications 1 à 3, caractérisé en ce qu'on ajuste lors du malaxage la teneur en eau à une valeur que est inférieure à la teneur en eau du produit activé à l'acide humide.

5. Procédé selon la revendication 4, caractérisé en ce qu'on ajuste lors du malaxage la teneur en eau à environ 35 à 50, de préférence à environ 40 à 50 % en poids.

6. Procédé selon l'une des revendications 1 à 5, caractérisé en ce qu'on soumet le granulé sec à un post-traitement thermique.

7. Procédé selon la revendication 6, caractérisé en ce qu'on effectue le post-traitement thermique à des températures allant jusqu'à environ 300 ° C, de préférence comprises de 100 à 250°C.

8. Granulé d'adsorbant, pouvant être obtenu selon le procédé selon l'une quelconque des revendications 1 à 7, caractérisé par une valeur de l'usure par abrasion à l'état mouillé inférieure à 20 %, la valeur de l'usure par abrasion à l'état mouillé étant définie comme suit :
   On verse dans un bécher en verre de 600 ml 500 ml d'eau du robinet ; on met en suspension dans celle-ci 10 g de granulés, lesquels ont été séchés pendant 3 heures à une température de 110 ° C. L'agitateur à pales, qui maintient la suspension aqueuse en suspension, se trouve placé à environ 4 cm du fond et tourne à 300 t/minute.
   Après un temps d'agitation de 24 heures, la suspension est filtrée au mouillé sur un tamis de 0,2 mm et le résidu est séché à 110 ° C et pesé en retour. La valeur de l'usure par abrasion à l'état mouillé en pourcentage est calculée selon la formule suivante : (pesée - résidu filtré) x 10 = valeur de l'usure par abrasion à l'état mouillé (%) .

9. Utilisation du granulé d'adsorbant selon la revendication 8 ou préparé selon le procédé selon l'une des revendications 1 à 7, pour éliminer les oléfines de mélanges d'hydrocarbures aromatiques en tant que catalyseurs pour réactions catalysées à l'acide.